Europäisches Patentamt

European Patent Office

Office européen des brevets

(19)

(11) **EP 0 675 614 B1**

(12) **FASCICULE DE BREVET EUROPEEN**

(45) Date de publication et mention
de la délivrance du brevet:
**11.07.2001 Bulletin 2001/28**

(51) Int Cl.⁷: **H04L 9/32**

(21) Numéro de dépôt: **95200701.1**

(22) Date de dépôt: **22.03.1995**

(54) **Dispositif pour l'échange sécurisé de données du genre RSA limité à la signature numérique et la vérification des messages et carte à microcircuit comportant un tel dispositif**

Vorrichtung begrenzt auf digitale Unterschriften und Nachrichtenüberprüfung, zum sicheren Austausch von Daten gemäss der RSA-Methode inbesondere auf einer smart card integriert

Apparatus for the secure exchange of data according to the RSA method limited to digital signatures and message verification and smart card containing such an apparatus

(84) Etats contractants désignés:
**DE FR GB IT SE**

(30) Priorité: **30.03.1994 FR 9403773**

(43) Date de publication de la demande:
**04.10.1995 Bulletin 1995/40**

(73) Titulaire: **OBERTHUR CARD SYSTEMS SA
75017 Paris (FR)**

(72) Inventeurs:
• **Ferreira, Ronald
F-75008 Paris (FR)**
• **Hoppe, Joseph
F-75008 Paris (FR)**

(74) Mandataire: **Barbin le Bourhis, Joel et al
Cabinet Bonnet-Thirion,
12, Avenue de la Grande-Armée
75017 Paris (FR)**

(56) Documents cités:
• **J. BIDZOS: 'THREATS TO PRIVACY AND PUBLIC KEYS FOR PROTECTION' PROCEEDINGS OF COMPCON '91 - 36TH IEEE COMPUTER SOCIETY INTERNATIONAL CONFERENCE SAN FRANCISCO 25 Février 1991 - 01 Mars 1991, NEW YORK (US), pages 189 - 194**
• **DATA COMMUNICATIONS, vol. 22, no. 11, Août 1993 NEW YORK US, pages 53-58, XP 000383974 S.SALAMONE 'CLINTON'S CLIPPER: CAN IT KEEP A SECRET?'**
• **IEEE SPECTRUM, vol. 29, no. 8, Août 1992 NEW YORK US, pages 29-35, XP 000311977 J.A.ADAM 'CRYPTOGRAPHY = PRIVACY?'**

## Description

L'invention concerne un dispositif permettant de mettre en oeuvre, conformément à un système d'échange sécurisé de données du genre RSA des fonctions de signature de messages et d'authentification de signature pour des messages signés.

Elle a d'importantes applications dans le domaine des communications cryptographiques, et tout particulièrement pour les cartes à puces.

Le système RSA d'échange sécurisé de données a été décrit dans le brevet américain n°4405829 de Rivest, Shamir et Adleman en 1978. Il repose sur la difficulté de factoriser un grand nombre "n" qui est le produit de deux nombres premiers "p" et "q". Dans ce système, le message à traiter est mis sous la forme d'une chaîne de nombres séparés en blocs de longueur fixe inférieure à "n". Chaque bloc M donne un cryptogramme C à l'aide d'un exposant "e" qui est accessible au public:

$$C = M^e \, \text{Mod}(n)$$

où Mod(n) indique que l'opération est effectuée modulo "n".

Pour déchiffrer le cryptogramme C, le destinataire doit connaître l'exposant secret "d" qui vérifie l'équation:

$$e.d \, \text{Mod}((p-1)(q-1)) = 1$$

afin d'effectuer l'opération suivante:

$$C^d \, \text{Mod}(n) = M^{ed} \, \text{Mod}(n) = M$$

Ce système permet également de signer les messages et d'authentifier les signatures. Un message M est signé par l'émetteur en utilisant sa clé secrète "d":

$$S = M^d \, \text{Mod}(n)$$

Le destinataire du message signé S peut alors authentifier cette signature en utilisant la clé publique "e" de l'émetteur:

$$S^e \, \text{Mod}(n) = M^{de} \, \text{Mod}(n) = M$$

L'évolution technologique des cartes à puces a été telle, qu'il est maintenant possible d'y implémenter à faible coût, tout en obtenant des performances satisfaisantes, des systèmes cryptographiques à clé publique, du genre RSA par exemple. Ainsi, de nombreux pays cherchent à créer des réseaux nationaux basés sur la technologie carte à puce pour des applications qui requièrent un haut niveau de sécurité telles que l'EDI (Echange de Données Informatisées), le porte-monnaie électronique, les systèmes bancaires ou les systèmes de santé...

Or, lorsque le système cryptographique utilisé est un système fort au sens où nul ne peut déchiffrer un message chiffré à l'exception du propriétaire de la clé secrète, une partie de la capacité de ces réseaux pourrait être détournée à des fins criminelles. La législation en vigueur interdit donc en principe le chiffrement de données pour les applications civiles.

Pour cela, il serait possible d'utiliser d'autres systèmes cryptographiques limités aux fonctions de signature, tel que le système DSS (de l'anglais Digital Signature Standard) qui est en cours de normalisation aux Etats-Unis, ou le système GQ décrit dans le brevet français N° 2 620 248 du 7 septembre 1987.

Toutefois, les systèmes cryptographiques du genre RSA présentent l'avantage d'offrir un très haut niveau de sécurité, d'être largement mis en oeuvre dans de nombreux produits, et de pouvoir être utilisés, lorsque cela serait nécessaire et autorisé, comme un système de chiffrement de données.

L'invention a donc pour but de rendre compatibles la législation en vigueur relative aux applications civiles de la carte à puce et l'utilisation d'un système cryptographique du genre RSA.

Ainsi, l'invention concerne un dispositif permettant de mettre en oeuvre, conformément à un système d'échange sécurisé de données du genre RSA, des fonctions de signature de message et d'authentification de signature pour des messages signés, caractérisé en ce que, pour inhiber les fonctions de chiffrement et le déchiffrement de messages propres à tout système du genre RSA, il comporte des moyens pour comparer chaque message à signer à une structure prédéterminée selon laquelle tout message doit être construit, et pour interdire la signature d'un message ne répondant pas à ladite structure.

Il est ainsi possible d'éviter qu'un fraudeur présente pour le signer un message chiffré ayant un sens, et ne réalise ainsi frauduleusement une opération de déchiffrement. En effet, un message cohérent chiffré n'étant ni prévisible ni contrôlable, il ne peut répondre à ladite structure.

De plus, un dispositif selon l'invention comporte alors avantageusement des moyens permettant, après l'authentification de la signature d'un message signé, de comparer le message obtenu avec la dite structure, et d'émettre une indication de résultat positif s'il y a correspondance entre les deux, et négatif sinon.

Ainsi, un message obtenu après une telle vérification de signature n'est jamais transmis vers l'extérieur lorsque l'indication de résultat est négative, ce qui permet d'éviter qu'un fraudeur ne présente pour une opération de vérification de signature un message "en clair" afin de le chiffrer frauduleusement.

Dans un second mode de réalisation, un dispositif selon l'invention comporte des moyens pour appliquer une fonction de condensation à tout message avant de le signer, puis pour émettre vers l'extérieur le message condensé et signé ainsi que le message en clair, si nécessaire.

Ainsi, il est impossible d'utiliser frauduleusement la fonction de signature comme fonction de déchiffrement, puisque la fonction de condensation est préalablement appliquée au message.

De plus un dispositif selon l'invention comporte alors avantageusement des moyens permettant, après l'authentification de la signature d'un message condensé et signé, de comparer le message condensé obtenu au message émis en clair auquel la dite fonction de condensation a été préalablement appliquée, et d'émettre une indication de résultat positif s'il y a correspondance entre les deux, et négatif sinon.

Ainsi, un message obtenu après une telle vérification de signature n'est pas transmis vers l'extérieur lorsque l'indication de résultat est négative.

L'invention concerne également une carte à microcircuit utilisant un système d'échange sécurisé de données du genre RSA et qui comporte un dispositif tel que décrit dans les paragraphes précédents.

D'autres particularités, détails et avantages de la présente invention seront mis en évidence dans la description qui va suivre en regard des dessins annexés qui sont relatifs à des exemples donnés à titre non limitatif dans lesquels:

- la figure 1 est une représentation schématique d'un dispositif selon l'invention,
- la figure 2 est une représentation schématique de l'organisation de la mémoire d'un dispositif selon l'invention,
- la figure 3 est un organigramme d'un procédé de fonctionnement d'un dispositif selon l'invention dans un premier mode de réalisation,
- la figure 4 est un organigramme d'un procédé de fonctionnement d'un dispositif selon l'invention dans un second mode de réalisation,
- la figure 5 est une représentation schématique d'une carte à puce comportant un dispositif selon l'invention.

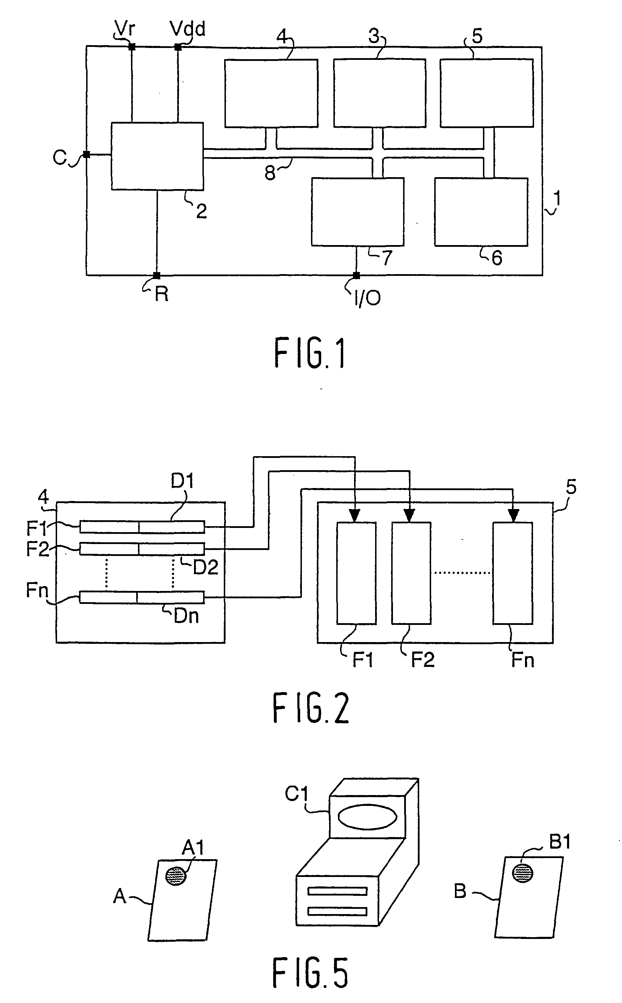

Un dispositif selon l'invention est réalisé à base d'un micro-contrôleur sécurisé d'un point de vue physique tel, par exemple, que le 83C852 fabriqué par Philips. Un tel micro-contrôleur 1 est représenté sur la figure 1 et composé à partir d'un microprocesseur 2, d'une mémoire vive 3, d'une mémoire morte 4 qui contient notamment des instructions de fonctionnement pour la mise en oeuvre de l'invention, et d'une mémoire EEPROM 5 pour contenir différentes données telles que la clé secrète de la carte, la clé publique d'un tiers avec lequel elle échange des informations... Il est également composé d'une unité de calcul 6 pour prendre en charge les opérations nécessaires à la réalisation des fonctions de cryptographie, d'une unité 7 de gestion des entrées/sorties reliée en outre à une entrée I/O du micro-contrôleur 1. Les éléments précités du micro-contrôleur 1 sont reliés entre eux par un bus 8.

Le microprocesseur 2 est d'autre part relié aux entrées R, C, Vr et Vdd du micro-contrôleur 1, l'entrée R étant destinée à recevoir un signal de réinitialisation du microprocesseur 2, l'entrée C un signal d'horloge extérieur, l'entrée Vr un signal de tension de référence et l'entrée Vdd un signal de tension d'alimentation.

Tout détail complémentaire peut être trouvé dans la notice du micro-contrôleur 83C852 précité.

D'après la figure 2, la mémoire morte 4 contient en outre pour chaque fichier de données F1, F2,...Fn contenu dans la mémoire EEPROM 5, un enregistrement comprenant le nom du fichier, le type des droits D1, D2...,Dn associés à ce fichier et un pointeur vers ce fichier dans la mémoire EEPROM 5. Ainsi, pour effectuer une opération sur une information d'un fichier de données de la mémoire EEPROM, il est nécessaire de passer par le microprocesseur 2 qui va contrôler que ce type d'opération est autorisé sur ces données.

Par exemple, la mémoire EEPROM comprend un fichier des clés publiques importées dans le dispositif et un fichier contenant la clé secrète du dispositif. Les droits associés à ces informations indiquent qu'elles ne sont pas lisibles de l'extérieur. De plus, selon l'invention, le fichier des clés importées dispose d'un droit qui limite l'accès à ses données aux opérations d'authentification de signature.

C'est cette organisation de la mémoire qui assure la protection des informations contenues dans le dispositif.

Dans un premier mode de réalisation du dispositif selon l'invention, tout message en clair Mo doit répondre à une structure prédéfinie. Dans l'exemple décrit par la suite, il a été choisi d'attribuer une valeur particulière aux 64 éléments binaires de poids fort de chaque message Mo (la taille des messages traités par le système RSA étant, dans cet exemple de réalisation, prise égale à 512 éléments binaires). Ces 64 éléments binaires prédéfinis sont enregistrés dans la mémoire EEPROM 5. De façon à faciliter le repérage d'une telle structure, il est intéressant de lui donner une forme régulière telle par exemple que "00....0" ou "11...1" ou "0101...01".

Toutefois on peut également choisir d'imposer une redondance connue à chaque message Mo, par exemple en répétant plusieurs fois le message ou certaines de ses parties.

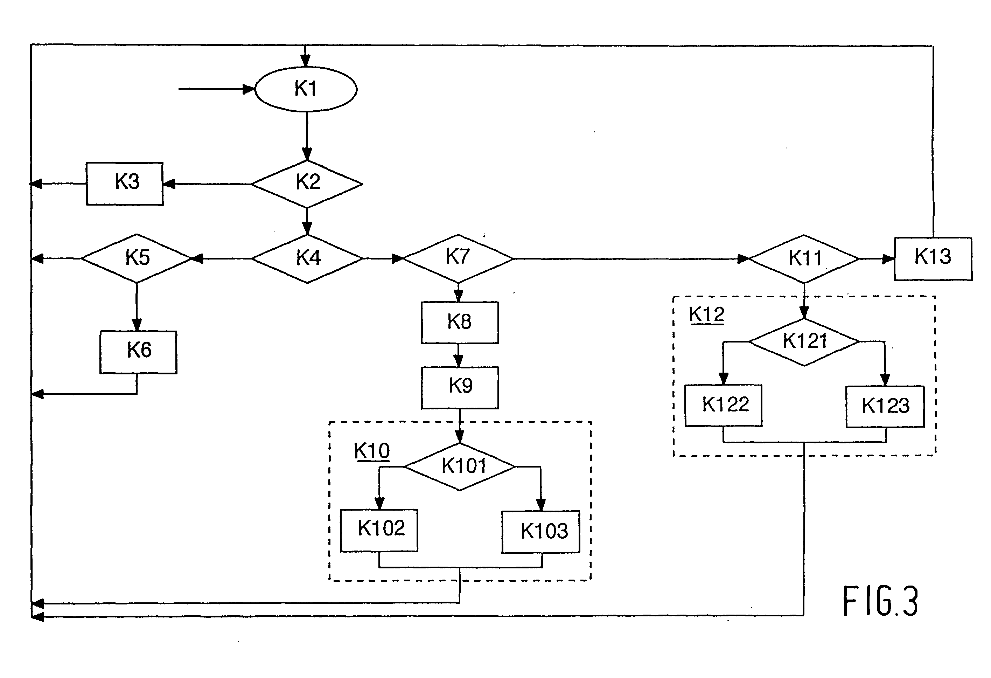

La figure 3 donne un organigramme d'un procédé de fonctionnement du dispositif selon l'invention dans ce premier mode de réalisation, les instructions correspondantes étant contenues dans la mémoire morte 4 du micro-contrôleur 1.

La signification des différents blocs de cet organigramme est donnée ci-dessous.

- case K1: le microprocesseur 2 attend qu'une demande arrive sur le port I/O du micro-contrôleur 1. Le contenu de ces demandes est défini dans les documents ISO/IEC 7816-3 et 7816-4, 1993. Elles comportent en outre un champ indiquant le type de l'instruction à effectuer (un chargement de clé publique dans le fichier des clés importées de la mémoire EEPROM 5, une signature, une authentification ou une vérification de signature par exemple), et un champ comportant les données à traiter. Dès la réception d'une demande, le procédé passe à la case K2.

- case K2: test permettant de déterminer s'il s'agit d'une **instruction de chargement de clé publique**. Si c'est le cas, le procédé se poursuit à la case K3. Sinon, il passe à la case K4.

- case K3: la clé publique passée dans le champs donnée de l'instruction est enregistrée dans le fichier des clés importées de la mémoire EEPROM 5. Puis le procédé reprend à la case K1.

- case K4: test permettant de déterminer s'il s'agit d'une **instruction de signature.** Dans ce cas le procédé continue à la case K5; sinon, il passe à la case K7.

- case K5: test de la structure du message Mo passé en paramètre de l'instruction. Si ses 64 éléments binaires de poids fort correspondent au motif prédéfini enregistré dans la mémoire EEPROM 5, il s'agit bien d'un message en clair et il est possible de le signer sans crainte de fraude (l'instruction de signature ne sera pas détournée pour réaliser un déchiffrement frauduleux): le procédé continue alors à la case K6. Sinon, l'opération est refusée, un message d'erreur est transmis vers le terminal (il s'agit en fait d'un message de réponse tel que défini dans les documents précités, dont le champ "statut " codé sur 2 octets définit le type de l'erreur), puis le procédé reprend à la case K1.

- case K6: calcul de la signature Ms = (Mo)$^d$ Mod(n), et émission vers l'extérieur de ce message signé Ms. Puis le procédé reprend à la case K1.

- case K7: test permettant de déterminer s'il s'agit d'une **instruction d'authentification de signature.** Si c'est le cas, le procédé se poursuit à la case K8. Sinon, il passe à la case K11.

- case K8: enregistrement dans la mémoire vive du message signé Ms passé dans le champs donnée de l'instruction, et de la clé publique "e" à utiliser qui est lue dans le fichier des clés importées de la mémoire EEPROM 5.

- case K9: calcul du message Mo'= (Ms)$^e$ Mod(n)

- case K10: vérification de la structure du message obtenu Mo' (case K101) en comparant ses 64 éléments binaires de poids fort au motif prédéfini qui est enregistré dans la mémoire EEPROM 5. Au cas où il n'y a pas correspondance entre les deux, une indication de résultat négatif est émise vers l'extérieur à la case K103 (son format est identique à celui du message d'erreur de la case K5). Au cas où il y a correspondance, le message Mo' est enregistré dans la mémoire vive 3, et une indication de résultat positif est émise vers l'extérieur à la case K102 (il s'agit également d'un message de réponse tel que défini dans les documents précités, dont le champ "statut" codé sur 2 octets indique qu'il n'y a pas d'erreur, et dont le champ "données" contient, si nécessaire le message authentifié). Puis le procédé reprend à la case K1.

- case K11 : test permettant de déterminer s'il s'agit d'une instruction de vérification de signature. Dans ce cas le procédé continu à la case K12 ; sinon il passe à la case K13.

- case K12 : comparaison du message en clair, reçu dans le champ de données de l'instruction, avec le message Mo' enregistré dans la mémoire vive 3 (case K121). S'ils sont identiques, une indication de résultat positif est émise vers l'extérieur (case K122). Sinon, c'est une indication de résultat négatif qui est émise (case K123). Puis, le procédé reprend à la case K1.

- case K13: traitement d'autres types d'instructions qui ne font pas partie du cadre de la présente invention et qui ne sont donc pas décrites ici. Puis retour à la case K1.

Ce premier mode de réalisation, qui a l'avantage d'être très simple, s'applique au cas où l'identité du correspondant est connue. Il est donc particulièrement bien adapté pour certaines applications dont l'utilisation finale est très bien déterminée.

Dans un second mode de réalisation du dispositif, une fonction de condensation est appliquée à tout message avant de le signer. De telles fonctions sont décrites dans l'article du 15 mars 1988 intitulé "Comment utiliser les fonctions de condensation dans la protection des données", Mireille CAMPAGA et Marc GIRAULT, SECURICOM 88, 6ème Congrès mondial de la protection et de la sécurité informatique et des communications, 15-17 mars 1998, Hôtel Pullman Saint-Jacques - Paris - FRANCE. Une propriété essentielle d'une telle fonction est que, dans la pratique, elle n'est pas inversible, et qu'il est impossible de trouver un autre message qui donne le même résultat.

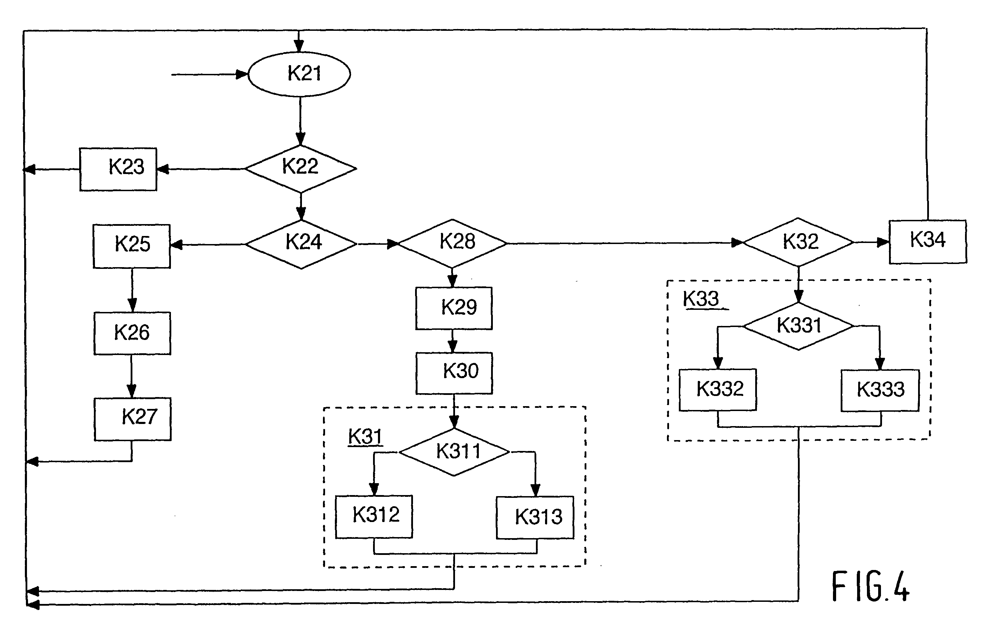

La figure 4 donne un organigramme d'un procédé de fonctionnement du dispositif selon l'invention dans ce second mode de réalisation, les instructions correspondantes étant contenues dans la mémoire morte 4 du micro-contrôleur 1.

La signification des différents blocs de cet organigramme est donnée ci-dessous.

- case K21: le microprocesseur 2 attend qu'une demande arrive sur le port I/O du micro-contrôleur 1. Le procédé passe ensuite immédiatement à la case K22.
- case K22: test permettant de déterminer s'il s'agit d'une **instruction de chargement de clé publique.** Si c'est le cas, le procédé se poursuit à la case K23. Sinon, il passe à la case K24.
- case K23: la clé publique passée dans le champs donnée de l'instruction est enregistrée dans le fichier des clés importées de la mémoire EEPROM 5. Puis le procédé reprend à la case K21.
- case K24: test permettant de déterminer s'il s'agit d'une **instruction de signature.** Dans ce cas le procédé continue à la case K25; sinon, il passe à la case K28.
- case K25: application de la fonction de condensation H au message Mo à signer qui a été passé en paramètre de l'instruction.
- case K26: le message H(Mo) ainsi obtenu est condensé. Or le système RSA traite, dans cet exemple, des messages d'une longueur fixe de 512 éléments binaires. Il est donc nécessaire compléter le message H(Mo), par ajout d'un motif Z prédéfini par exemple (qui est enregistré dans la mémoire EEPROM 5), de façon à le ramener à une longueur de 512 éléments binaires. Soit {M'=H(Mo)‖Z} le message ainsi obtenu (où le signe ‖ indique l'opération de concaténation).
- case K27: calcul de la signature $Ms = (M')^d \; Mod(n)$, et émission vers l'extérieur de ce message signé Ms. Puis le procédé reprend à la case K1.
- case K28: test permettant de déterminer s'il s'agit d'une **instruction d'authentification de signature.** Si c'est le cas, le procédé se poursuit à la case K29. Sinon, il passe à la case K32.
- case K29: enregistrement dans la mémoire vive du message signé Ms passé dans le champs données de l'instruction, et de la clé publique "e" à utiliser qui est lue dans le fichier des clés importées de la mémoire EEPROM 5.
- case K30: calcul du message $M'' = (Ms)^e \; Mod(n)$
- case K31: vérification de la structure du message obtenu (case K311): il doit avoir la forme X‖Z où Z est le motif prédéfini qui est enregistré dans la mémoire EEPROM 5. Si ce n'est pas le cas, une indication de résultat négatif est émise vers l'extérieur (case K313). Sinon, le message X est enregistré dans la mémoire vive 3, et une indication de résultat positif est émise vers l'extérieur (case K312). Puis le procédé reprend à la case K1. Cette authentification est un premier contrôle qui permet de s'assurer que le message Ms passé en paramètre est effectivement un message signé par la clé secrète correspondant à la clé publique "e".
- case K32: test permettant de déterminer s'il s'agit d'une **instruction de vérification de signature.** Dans ce cas le procédé continue à la case K33; sinon il passe à la case K34.
- case K33: comparaison du message en clair reçu dans le champs de données de l'instruction, auquel est préalablement appliquée la fonction de condensation H, avec le message X enregistré dans la mémoire vive 3 (case K331). S'ils sont identiques, une indication de résultat positif est émise vers l'extérieur (case K332). Sinon, c'est une indication de résultat négatif qui est émise (case K333). Puis, le procédé reprend à la case K1.
- case K34: traitement d'autres types d'instructions qui ne font pas partie du cadre de la présente invention et qui ne sont donc pas décrites ici. Puis retour à la case K1.

Bien que le premier mode de réalisation apporte entière satisfaction, il est parfois nécessaire de disposer d'une protection accrue. Une telle protection accrue est obtenue dans ce second mode de réalisation, plus sûr du point de vue de la signature puisqu'il met en oeuvre une fonction de condensation. Il apporte de plus l'avantage supplémentaire de permettre d'utiliser le concept de certificat de clé publique (défini dans la recommandation X509 du CCITT), pour vérifier l'origine de la clé publique à utiliser pour authentifier un message signé.

En effet, tout utilisateur A muni d'un dispositif selon l'invention dispose, enregistré dans sa mémoire EEPROM, d'un certificat de clé publique $C_A$, signé par l'autorité AS du système, et de paramètres publics $PP_A$ définis de la façon suivante:

$$C_A = [H(PP_A)]^{d_{AS}} Mod(n_{AS})$$

avec $PP_A = Id_A||e_A||Val_A||n_A||...$

où

- PP$_A$ sont les paramètres publiques de l'utilisateur A,
- H est la fonction de condensation,
- Id$_A$ est un identifiant de l'utilisateur A,
- Val$_A$ est la date de validité de la clé publique e$_A$ de l'utilisateur A,
- les points de suspension indiquent que d'autres paramètres peuvent éventuellement être pris en compte,
- n$_A$ et n$_{AS}$ sont les modulo de l'utilisateur A et de l'autorité AS,
- et d$_{AS}$ est la clé secrète de l'autorité AS.

Ainsi lorsque l'utilisateur A envoie un message signé à l'utilisateur B, il lui envoie également ses paramètres publiques PP$_A$ en clair et son certificat de clé publique C$_A$. L'utilisateur B est alors en mesure d'authentifier le certificat de clé publique C$_A$ de l'utilisateur A en appliquant la procédure suivante:

- il applique la fonction de condensation H aux paramètres publiques PP$_A$.
- il calcule: $T = C_A{}^{e_{AS}} Mod(n_{AS})$ où e$_{AS}$ est la clé publique de l'autorité AS, disponible de façon sûre dans chaque dispositif,
- puis il compare le message T obtenu à H(PP$_A$). S'il y a égalité, la clé publique e$_A$ de l'utilisateur A, et son modulo n$_A$ sont authentifiés, et l'utilisateur B peut les utiliser pour authentifier un message signé tel que cela a été décrit précédemment.

Cette procédure d'authentification de la clé publique d'un utilisateur A par un utilisateur B consiste en fait à appliquer au certificat de clé publique C$_A$ la fonction d'authentification de signature décrite ci-dessus, et aux paramètres publiques PP$_A$ la fonction de vérification de signature décrite ci-dessus.

Ce second mode de réalisation du dispositif selon l'invention apporte donc l'avantage supplémentaire de permettre de vérifier l'authenticité des clés publiques des utilisateurs avant d'authentifier et de vérifier les signatures.

Dans un autre mode de réalisation, la fonction de déchiffrement n'est autorisée que pour certains utilisateurs. Pour cela, il suffit d'associer à chaque clé secrète un critère d'utilisation pour le déchiffrement limité à ces utilisateurs, et:

- pour le premier mode de réalisation, de rajouter à la case K10, avant de tester la structure du message obtenu, un test sur la valeur de ce critère d'utilisation, de telle sorte que la structure du message obtenu ne soit vérifiée que si l'opération de déchiffrement est interdite.
- pour le second mode de réalisation, de mettre en place à la case K34 une instruction de déchiffrement, l'exécution de cette instruction étant subordonnée à un test sur la nature du critère d'utilisation de la clé secrète contenue dans le fichier clé secrète de la mémoire EEPROM 5.

La figure 5 représente un système d'échange de données comportant deux cartes à puce A et B munie chacune d'un dispositif selon l'invention 1A et 1B. Les titulaires respectifs de ces deux cartes à puce communiquent par l'intermédiaire d'un terminal C1.

Les systèmes de santé constituent un exemple d'application pratique d'un tel système: la carte personnelle du patient, constituée par la carte A, et celle du professionnel de santé qui traite le dossier du patient, qui est constituée par la carte B, échangent des informations par l'intermédiaire du terminal C1, localisé chez le médecin.

On donne en annexe un exemple de protocole d'échange entre ces trois éléments, pour le second mode de réalisation du dispositif selon l'invention (I1, I2, I3 et I4 sont des indications de résultat positif ou négatif émises par la carte B vers le terminal C1 après chaque opération réalisée).

Il va de soi que des modifications peuvent être apportées aux modes de réalisation qui viennent d'être décrits, notamment par substitution de moyens techniques équivalents, sans que l'on sorte pour cela du cadre de la présente invention.

ANNEXE

```
      CARTE A                      TERMINAL C1                     CARTE B


                signature Mo
                <----------


                envoi M
                       sA
                ------------->


                demande C ,  PP
                         A      A
                <-------------
                                                    Authentification C
                                                                      A
                                                    ----------------->

                                                    Indication I1
                                                    <------------


                                         Si I1     Vérification PP
                                         positive  ------------->   A


                                                    Indication I2
                                                    <-------------


                                         Si I2     Authentification M
                                         positive  -------------->    sA


                                                    Indication I3
                                                    <-------------


                                         Si I3     Vérification M
                                         positive  --------------->  sA


                                                    Indication I4
                                                    <-------------
                                         FIN
```

**Revendications**

1. Dispositif permettant de mettre en oeuvre, conformément à un système d'échange sécurisé de données du genre RSA, des fonctions de signature de messages (K4) et d'authentification de signature (K7) pour des messages signés, caractérisé en ce que, pour inhiber les fonctions de chiffrement et de déchiffrement de messages propres à tout système du genre RSA, il comporte des moyens pour comparer (K121) chaque message (Mo) à signer à une structure prédéterminée (5) selon laquelle tout message doit être construit, et pour interdire (K123) la signature d'un message ne répondant pas à ladite structure.

2. Dispositif selon la revendication 1, caractérisé en ce qu'il comporte des moyens permettant, après l'authentification de la signature d'un message signé (Ms), de comparer le message obtenu (Mo') avec ladite structure, et d'émettre une indication de résultat positif s'il y a une correspondance entre les deux, et négatif sinon.

3. Dispositif selon l'une des revendications 1 ou 2, caractérisé en ce qu'un critère d'utilisation est associé à chaque clé secrète pour permettre d'autoriser la fonction de déchiffrement pour un nombre restreint d'utilisateurs.

4. Carte à microcircuit utilisant un système d'échange sécurisé de données du genre RSA, caractérisée en ce qu'elle comporte un dispositif selon l'une des revendications 1 à 3.

**Claims**

1. Device permitting the use, in accordance with a system for secure exchange of data of the RSA type, of the functions of signing messages (K4) and signature authentication (K7) for signed messages, characterised by the fact that, to prevent the functions of encryption and decryption of messages belonging to any system of the RSA type, it includes means for comparing (K121) each message (Mo) to be signed with a predetermined structure (5) in accordance with which any message must be constructed, and to prevent (K123) the signing of a message not answering to the said structure.

2. Device as described in claim 1, characterised by the fact that it includes means permitting, after authentication of the signature of a signed message (Ms), comparison of the message obtained (Mo') with the said structure and emission of an indication of positive result if there is a correspondence between the two, and negative if not.

3. Device as described in one of claims 1 or 2, characterised by the fact that one criterion of use is associated with each secret key to permit authorisation of the decryption function for a limited number of users.

4. Micro-circuit card using a system for secure exchange of data of the RSA type, characterised by the fact that it includes a device in accordance with one of claims 1 to 3.

**Patentansprüche**

1. Vorrichtung zum Einsetzen von Funktionen einer Unterschrift von Nachrichten (K4) und einer Authentifizierung bzw. Überprüfung einer Unterschrift (K7) für unterschriebene Nachrichten entsprechend einem System eines gesicherten Austausches von Daten des RSA-Typs, dadurch gekennzeichnet, daß sie zum Hindern von Chiffrier- und Dechiffrierfunktionen von geeigneten Nachrichten mit jedem System des RSA-Typs Mittel zum Vergleichen (K121) von jeder zu unterzeichnenden Nachricht (Mo) mit einer vorbestimmten Struktur (5), gemäß welcher jede Nachricht aufgebaut sein muß, und zum Verhindern (K123) der Unterschrift einer Nachricht, die nicht dieser Struktur genügt, umfaßt.

2. Vorrichtung nach Anspruch 1, dadurch gekennzeichnet, daß sie Mittel umfaßt, die nach der Authentifizierung der Unterschrift einer unterschriebenen Nachricht (Ms) einen Vergleich der erhaltenen Nachricht (Mo') mit der Struktur und eine Abgabe eines Hinweises eines positiven Resultats, wenn eine Übereinstimmung zwischen den zweien besteht, und eines negativen, wenn nicht, erlaubt.

3. Vorrichtung nach Anspruch 1 oder 2, dadurch gekennzeichnet, daß ein Benutzungskriterium jedem Geheimschlüssel zugeordnet ist, um eine Autorisierung der Dechiffrierfunktion für eine beschränkte Anzahl von Benutzern zu erlauben.

4. Mikrochipkarte, die ein gesichertes Austauschsystem von Daten des RSA-Typs umfaßt, dadurch gekennzeichnet, daß sie eine Vorrichtung nach einem der Ansprüche 1 bis 3 umfaßt.

FIG.1

FIG.2

FIG.5

FIG.3

FIG.4